# EUROPÄISCHE PATENTSCHRIFT

(11) **EP 2 190 563 B1**
(45) Veröffentlichungstag und Bekanntmachung des Hinweises auf die Patenterteilung: **28.09.2011**
(21) Anmeldenummer: 08760623.2
(22) Anmeldetag: 06.06.2008
(51) Int. Cl.: B01F 3/08, B01F 3/10, B01F 7/00, B01F 7/18, B01F 15/02, A61C 9/00, B05C 17/005

(54) **DYNAMISCHER MISCHER**
DYNAMIC MIXER
MÉLANGEUR DYNAMIQUE

(30) Priorität: 10.09.2007 CH 14122007
(43) Veröffentlichungstag der Anmeldung: 02.06.2010
(73) Patentinhaber: Sulzer Mixpac AG, 9469 Haag (Rheintal) (CH)
(72) Erfinder: WINTERGERSTE, Torsten, CH-8606 Greifensee (CH); HOLDENER, Hubert, CH-6010 Kriens (CH); LEUE, Percy, 78224 Singen (DE)
(74) Vertreter: Sulzer Management AG
(86) Internationale Anmeldenummer: PCT/EP2008/057049
(87) Internationale Veröffentlichungsnummer: WO 2009/033832

(56) Entgegenhaltungen:
- EP-A- 1 099 470
- WO-A-98/43727
- DE-A1- 2 000 981
- DE-A1- 10 019 893
- DE-A1-102004 008 748
- DE-C1- 10 164 385
- JP-A- 6 226 178

## Beschreibung

Die Erfindung betrifft einen dynamischen Mischer gemäss dem Oberbegriff von Patentanspruch 1.

Die DE 101 64 385 C1 und die EP-A-1 099 470 offenbaren einen dynamischen Mischer zum Vermischen zweier pastöser Massen mit einem Rotor mit Mischerelementen und einem Gehäuse, das vordere Einlassöffnungen für die pastösen Komponenten und eine hintere Auslassöffnung für die vermischte pastöse Masse aufweist, wobei in einer Vorkammer die einzelnen Komponenten in unterschiedlich langen Zuführkanälen geführt werden, bevor die entsprechenden Komponenten in eine Art Vorkammer und danach in eine die Mischerelemente enthaltende Hauptkammer geleitet werden.

Aus der WO 2007/041878 der gleichen Anmelderin ist ein dynamischer Mischer zum Mischen von Komponenten mit unterschiedlichen Volumenanteilen bekannt, insbesondere zur Herstellung von Abformmassen für dentale Abdrücke. Im Innenraum des Mischergehäuses ist eine Vorkammer angeordnet, innerhalb welcher der Mischrotor einen Verteilkörper zum Verteilen der Komponenten um seine Rotationsachse aufweist, um dadurch ein richtiges Mischungsverhältnis zwischen den Komponenten zu erzielen und um Lufteinschlüsse zu vermeiden. Anschliessend gelangen die vorgemischten Komponenten zu ihrem vollständigen Durchmischen durch mindestens eine Durchtrittsöffnung in eine Hauptkammer.

Der Zweck einer Unterteilung in zwei getrennte Mischkammern besteht darin, dass in der Vorkammer bereits eine globale Homogenisierung des Komponentengemisches erreicht werden soll, während anschliessend in der Hauptkammer eine lokale Homogenisierung stattfindet. Denn das Mischen von zwei oder mehreren Komponenten erfordert sowohl auf globaler Ebene eine gleichmässig punktuelle Verteilung der Komponenten über den gesamten Strömungsquerschnitt als auch auf lokaler Ebene eine möglichst geringe örtliche Abweichung von der mittleren Konzentration. Dabei bietet der Verteilkörper zwar eine Vergrösserung der Verteiloberfläche für die Komponenten, deren Ausdehnung für die Vormischung der Komponenten auf globaler Ebene wesentlich ist, jedoch ist die Oberflächenvergrösserung aufgrund der geometrischen Zwangsbedingungen entlang der Rotorachse eingeschränkt. Hinzu kommt als wichtiger Faktor eine möglichst lange Verweildauer der Komponenten innerhalb der Vorkammer zu Beginn des Mischvorgangs, da mit einer anfänglichen Konzentrationsschwankung der zugeführten Komponenten zu rechnen ist, insbesondere bei der Komponente mit dem kleineren Volumenanteil. Durch eine geeignete Verweildauer innerhalb der Vorkammer können die anfänglichen Konzentrationsabweichungen der zugeführten Komponenten ausgeglichen werden und somit ein Ausschuss bezüglich des anfänglich vom Mischer austretenden Mischguts vermieden werden. Dabei lässt sich bei dem vorbekannten Mischer die Verweildauer innerhalb der Vorkammer lediglich durch eine gewählte Dimensionierung der Durchtrittsöffnung beeinflussen.

Die DE 100 15 133 C1 offenbart einen weiteren dynamischen Mischer mit einem im vorderen Kammerabschnitt angeordneten, kuppelförmig ausgebildeten ersten Mischflügel, der als Durchlässe fungierende Ausnehmungen aufweist und der sich in seinem äusseren Radialabschnitt entlang einer trichterförmig verlaufenden Innenwandung des Gehäuses erstreckt. Axial dahinter ist ein zweiter Mischflügel mit Durchlässen derart angeordnet, dass die Durchlässe des einen Mischflügels durch den jeweils nicht freien Teil des anderen Mischflügels abgedeckt sind. Hierdurch wird erreicht, dass vom ersten Mischflügel nicht erfasstes Material mit hoher Wahrscheinlichkeit vom zweiten Mischflügel erfasst wird.

Durch eine solche Flügelanordnung kann je nach Anzahl der Mischflügel ein hoher Homogenisierungsgrad des Gemisches erreicht werden. Jedoch wird einer anfänglichen Konzentrationsabweichung der zugeführten Komponenten wenig Rechnung getragen. Denn die Verweildauer der zugeführten Komponenten an jedem der Mischflügel kann nur durch möglichst kleine Dimensionierung der jeweiligen Ausnehmungen positiv beeinflusst werden, da die flächige Ausdehnung des einen Mischflügels der Grösse der Ausnehmungen des jeweils anderen Mischflügels entsprechen bzw. diese übertreffen muss. Dies ermöglicht nur eine vergleichsweise geringe Verweildauer an den jeweiligen Mischflügeln, sodass vorübergehende Konzentrationsschwankungen kaum ausgeglichen werden können. Zudem ist vor allem durch den Materialanteil, der lediglich von einem der beiden Mischflügel erfasst wird, mit einer erheblichen Verschlechterung des anfänglichen Mischverhältnisses zu rechnen.

Hiervon ausgehend liegt der Erfindung die Aufgabe zugrunde einen dynamischen Mischer der eingangs genannten Art derart weiterzubilden, dass unter Vermeidung der vorgenannten Nachteile eine präzise Konzentrationsregelung der zugeführten Komponeten auch unter vorübergehenden Konzentrationsschwankungen derselben bei gleichzeitig hohem Homogenisierungsgrad auf globaler und lokaler Ebene gewährleistet ist, wobei auch seine Baulänge durch erhöhte Effizienz um mindestens eine Mischstufe minimiert sein soll.

Die genannte Aufgabe wird durch einen dynamischen Mischer gemäss Patentanspruch 1 gelöst. Durch die umfängliche Anordnung vereinzelter Durchgangskanäle findet erfindungsgemäss der Volumenstrom zwischen der Vorkammer und der Hauptkammer kontrolliert nur in diesen lokalen Bereichen statt. Dadurch ergibt sich eine verlängerte Verweildauer der Komponenten in der Vorkammer, sodass vorübergehende Konzentrationsschwankungen der zugeführten Komponenten ausgeglichen werden.

In bevorzugter Ausführung gemäss Patentanspruch 6 ist zum Vormischen der Komponenten auf globaler Ebene vor den Einzelkanälen mindestens ein grossflächiger Mischflügel mit Durchgangsöffnungen angeordnet. Derart ist erfindungsgemäss der Volumenstrom zwischen Vorkammer und Hauptkammer nur während einer temporären Flächenüberlappung zwischen den rotierenden Durchgangsöffnungen und den Einzelkanälen ermöglicht.

Weitere bevorzugte Ausführungsformen der Erfindung sind jeweils durch die übrigen abhängigen Patentansprüche definiert.

Nachfolgend ist die Erfindung anhand einer bevorzugten Ausführungsform unter Bezugnahme auf die Zeichnungen näher erläutert, anhand welcher sich weitere Eigenschaften und Vorteile der Erfindung ergeben. Die Figuren, die Beschreibung und die Ansprüche enthalten zahlreiche Merkmale in Kombination, die der Fachmann auch einzeln betrachten und zu sinnvollen weiteren Kombinationen zusammenfassen wird. Dabei zeigen:
- Fig. 1:: Eine Seitenansicht eines erfindungsgemässen dynamischen Mischers, wobei das Gehäuse in einem axialen Teilschnitt dargestellt ist;
- Fig. 2:: Eine Vorderansicht des in Fig. 1 gezeigten dynamischen Mischers;
- Fig. 3:: Die in Fig. 2 gezeigte Vorderansicht des dynamischen Mischers, wobei der Deckel des Gehäuses entfernt wurde;
- Fig. 4:: Die in Fig. 3 gezeigte Vorderansicht des dynamischen Mischers, wobei der Rotor aus dem Gehäuse entfernt wurde;
- Fig. 5:: Eine Rückansicht des in den Figg. 1 - 4 gezeigten dynamischen Mischers;
- Fig. 6:: Eine perspektivische Ansicht des in den Figg. 1 - 5 gezeigten dynamischen Mischers; und
- Fig. 7:: Eine Explosionsdarstellung des in den Figg. 1 - 6 gezeigten dynamischen Mischers.

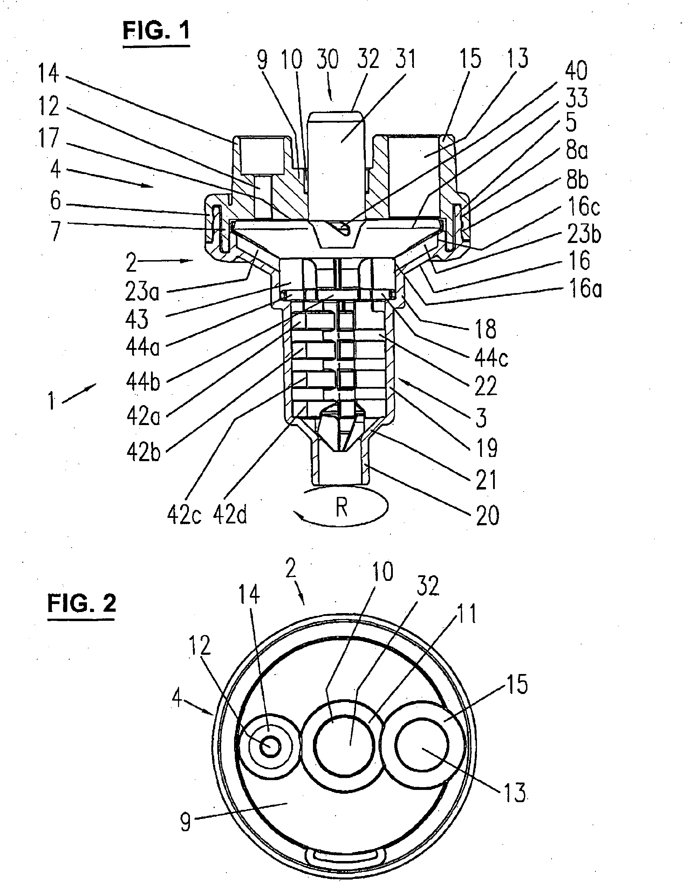

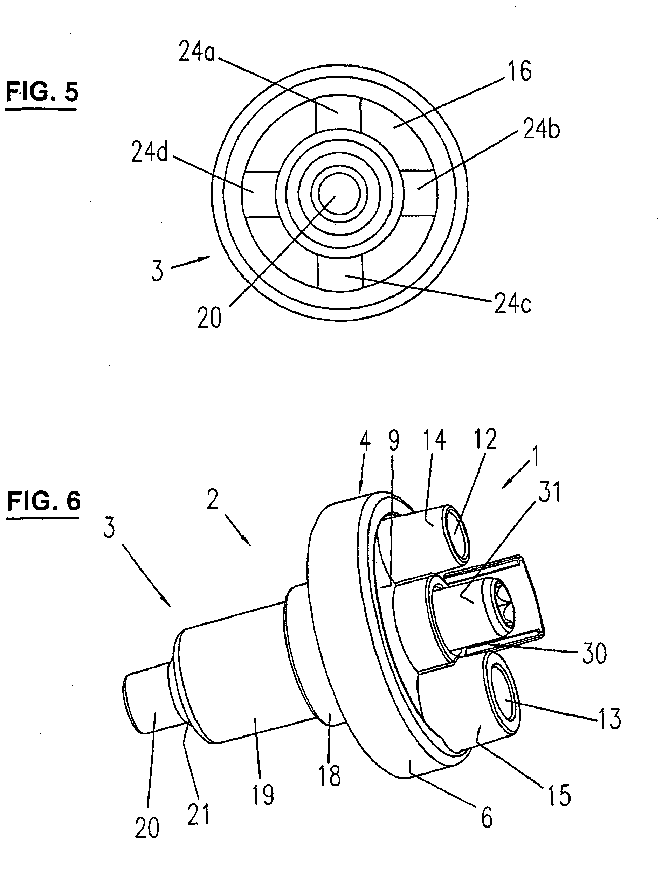

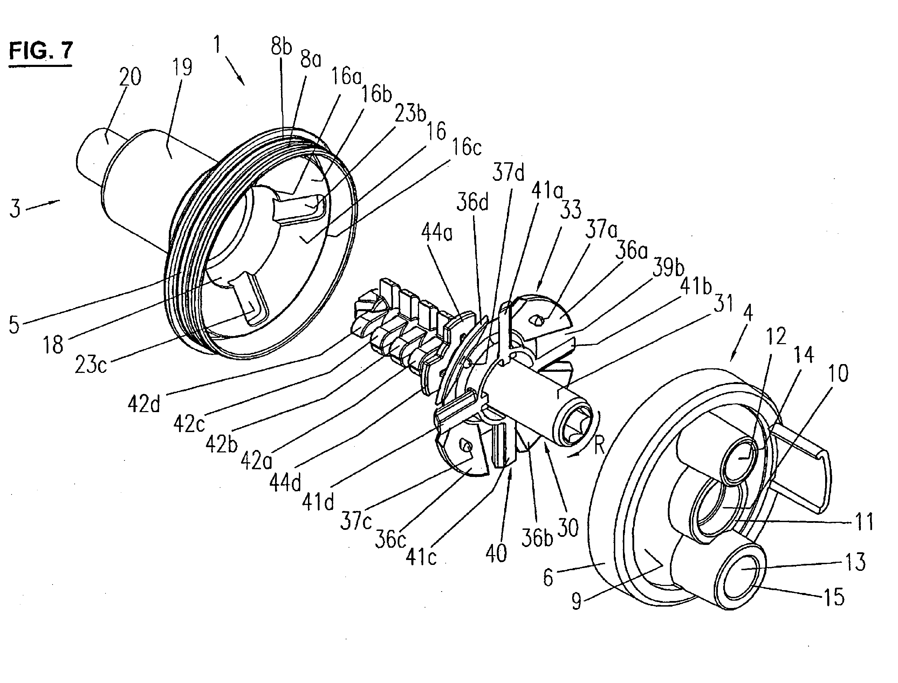

Ein in den Figg. 1 - 7 gezeigter dynamischer Mischer 1 umfasst ein Gehäuse 2 mit einem Gehäusekörper 3, der vorderseitig durch einen Deckel 4 dichtend verschliessbar ist. Hierzu weist der Deckel 4 eine zylinderförmige Aussen- und Innenwand 6 und 7 mit gegenseitiger radialer Beabstandung auf, in welche eine vorderseitig in dem Gehäusekörper 3 vorhandene zylinderförmige Dichtlippe 5 eingreift. Entlang des Aussenumfangs der Dichtlippe 5 sind ringförmige Aussparungen 8a, 8b vorgesehen, in die korrespondierende entlang der Innenseite der Aussenwand 6 des Deckels 4 ausgebildete Auskragungen formschlüssig einrasten.

Eine kreisscheibenförmige Vorderwand 9 des Deckels 4 weist eine konzentrische Rotoröffnung 10 auf, die aussenseitig von einer zylinderförmigen Aufnahme 11 mit geringfügig grösserem Innendurchmesser umrandet ist. An zwei gegenüberliegenden Seiten neben der Rotoröffnung 10 befindet sich jeweils eine Einlassöffnung 12, 13 für die zu mischenden Komponenten in der Vorderwand 9 des Deckels 4. Die Einlassöffnungen 12, 13 sind unterschiedlich gross ausgebildet, wobei die Einlassöffnung 12 mit dem geringeren Durchmesser zur Zuführung einer Komponente mit einem geringeren Volumenanteil beim Mischen der Komponenten vorgesehen ist. Die Einlassöffnungen 12, 13 sind deckelaussenseitig von jeweils einer zylinderförmigen Aufnahme 14, 15 für Kartuschen mit den jeweiligen Komponenten umrandet. Der Innendurchmesser der Aufnahme 14 weist einen grösseren Innendurchmesser als die kleine Einlassöffnung 12 auf, während die grosse Einlassöffnung 13 und der Innendurchmesser ihrer Aufnahme 15 gleich gross sind.

Hinter der axial sich erstreckenden Dichtlippe 5 schliesst sich in dem Gehäusekörper 3 ein konisch sich verjüngender Übergangsabschnitt 16 an. Der von den Innenwandungen des Deckels 4 und des Übergangsabschnitts 16 begrenzte Innenraum bildet eine Vorkammer 17, innerhalb welcher eine Vormischung der Komponenten hinsichtlich einer globalen Homogenisierung des Gemisches stattfindet.

An seinem hinteren Ende mündet der Übergangsabschnitt 16 in einen axial verlaufenden kurzen Zylinderabschnitt 18 des Gehäusekörpers 3. Hinter dem kurzen Zylinderabschnitt 18 schliesst sich nach einer abrupten stufenförmigen Verjüngung ein langer Zylinderabschnitt 19 mit geringerem Innendurchmesser an. Am hinteren Ende des langen Zylinderabschnitts 19 ist nach einer weiteren konischen Verjüngung 21 eine zylinderförmige Auslassöffnung 20 angeordnet. Der Innenraum des Gehäusekörpers 3, der durch die innere Seitenkante 16a des Übergangsabschnitts 16 sowie durch die Innenwandungen des kurzen und langen Zylinderabschnitts 18 und 19 begrenzt ist, entspricht einer Hauptkammer 22 zum Durchmischen der Komponenten auf lokaler Ebene.

Entlang der Innenwandung 16b des Übergangsabschnitts 16 sind umfänglich vier vereinzelte Vertiefungen 23a-d ausgebildet. Die Vertiefungen 23a-d erstrecken sich ihrer Länge nach radial schräg nach hinten im Wesentlichen über den gesamten Übergangsabschnitt, wobei sie an ihrem vorderen geschlossenen Ende an eine äussere Seitenkante 16c des Übergangsabschnitts 16 angrenzen und an ihrem hinteren Ende im Bereich der inneren Seitenkante 16a offen sind, sodass sie von der Vorkammer 17 in die Hauptkammer 22 münden. Die Breite der Vertiefungen 23a-d erstreckt sich lediglich jeweils über einen Teilumfang des Übergangsabschnitts 16. Dabei weisen benachbarte Vertiefungen 23a-d in Umfangsrichtung des Übergangsabschnitts 16 den jeweils gleichen Abstand auf. Durch die Vertiefungen sind Einzelkanäle 23a-d für die vorgemischten Komponenten geschaffen, die einen Durchgang von der Vorkammer 17 in die Hauptkammer 22 ermöglichen. In der Gehäuseaussenwand sind den innenseitigen Vertiefungen 23a-d entsprechende lokale Auskragungen 24a-d vorhanden.

Das beschriebene Gehäuse 2 weist eine Länge von ca. 6 cm und an seiner Frontseite eine Breite von ca. 4 cm auf und besteht aus spritzgegossenem Kunststoff.

In dem Gehäuse 2 ist ein Rotor 30 angeordnet. Der Rotor 30 weist eine Rotorachse 31 auf, die durch die Rotoröffnung 10 und die zylinderförmige Aufnahme 11 in der Vorderwand 9 des Deckels 4 ragt und derart an ihrem vorderseitigen freien Ende 32 an eine Mischerantriebswelle koppelbar ist.

Im hinteren Bereich der Vorkammer 17 ist ein hinterer Mischflügel 33 an der Rotorachse 31 angeordnet. Der innere Flügelabschnitt 34 des hinteren Mischflügels 33 hat die Form einer radial sich erstreckenden, flachen Kreisscheibe, die konzentrisch um die Rotorachse 31 angeordnet ist. An den Aussenumfang des inneren Flügelabschnitts 34 schliesst sich ein äusserer Flügelabschnitt 35 an, der vier Flügelblätter 36a-d umfasst, die jeweils im Wesentlichen die Form eines gebogenen Kreisringsegments aufweisen. Die Flügelblätter 36a-d sind gleichmässig beabstandet und ausgehend vom inneren Flügelabschnitt 34 in radialer Hinsicht schräg gegen vorne gestellt, sodass der äussere Flügelabschnitt 35 auf seiner Einlassseite eine radial nach innen gerichtete Senkung aufweist. Durch die somit erreichte Tellerform dient der hintere Mischflügel 33 als vorübergehendes Auffangbecken während des Konzentrationsregelungs- und Vormischprozesses der Komponenten.

Im Zentralbereich jedes der Flügelblätter 36a-d ist jeweils ein Verwirbelungselement 37a-d in Form einer axialen zapfenförmigen Auskragung angeordnet. Die zwei Seitenkanten 38a, b jedes der Flügelblätter 36a-d sind nach hinten hin abgeschrägt. Durch die gleich grosse Beabstandung jeweils benachbarter Flügelblätter 36a-d in Umfangsrichtung des hinteren Mischflügels sind vier Durchgangsöffnungen 39a-d für die Komponenten geschaffen.

Die Aussenkontur des so gebildeten hinteren Mischflügels 33 ist an die Innenwandung 16b des Übergangsabschnitts 16 angepasst, wobei die Neigung und Länge der Flügelblätter 36a-d im Wesentlichen derjenigen der Innenwandung 16b des Übergangsabschnitts 16 entspricht und der dahinter angeordnete kurze Zylinderabschnitt 18 mit dem inneren Flügelabschnitt 34 in seinem radialen Querschnitt im Wesentlichen übereinstimmt. Dadurch ist eine Abdichtung der Vorkammer 17 von der Hauptkammer 22 erzielt, sodass ein Durchlassen der Komponenten lediglich durch die Durchgangsöffnungen 39a-d und die dahinter angeordneten Einzelkanäle 23a-d erfolgt. Dabei weist die Breite der Durchgangsöffnungen 39a-d und die Breite der Einzelkanäle 23a-d in etwa die gleiche Grössenordnung auf, wobei die Durchgangsöffnungen 39a-d bevorzugt geringfügig breiter sind. Eine minimale axiale Beabstandung zwischen der Innenwandung 16b des Übergangsabschnitts 16 und dem hinteren Mischflügel 33 vermeidet ein starkes Aneinanderreiben dieser Elemente beim Rotieren der Achse 31 und durch eine Wandgängigkeit des Mischflügels hervorgerufene Materialabstreifungen entlang der Innenwandung.

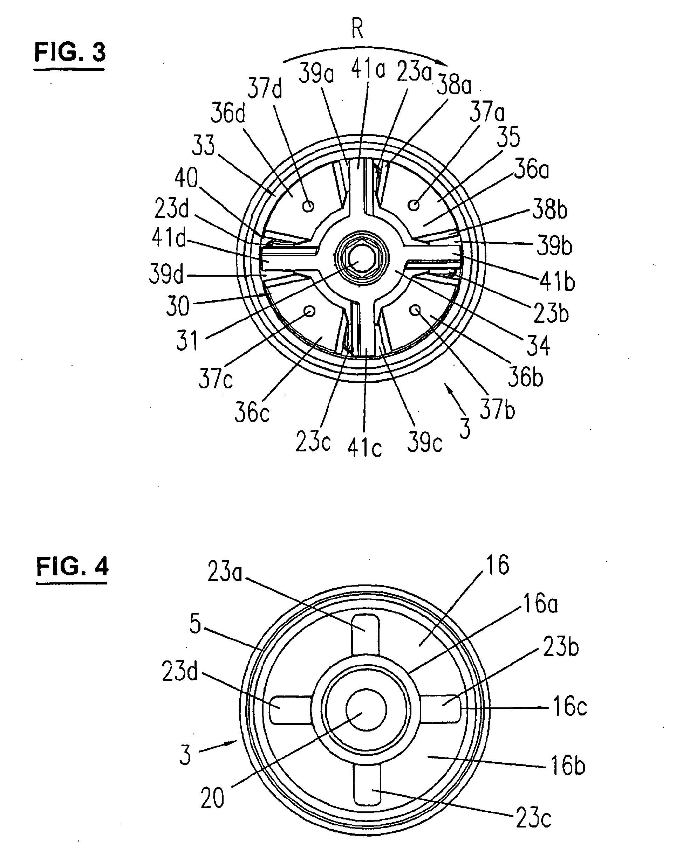

Der Rotor 30 umfasst innerhalb der Vorkammer 17 in axialer Richtung vor dem hinteren Mischflügel 33 einen vorderen Mischflügel 40. Der vordere Mischflügel 40 besteht aus vier im Wesentlichen leistenförmigen Mischflügeln 41a-d. Die Mischflügel 41a-d erstrecken sich radial von der Rotorachse 31 mit einer Länge, die radial gesehen an den Aussenumfang des dahinter angeordneten hinteren Mischflügels 33 heranreicht. Sie grenzen dabei von innen an die Innenwand 7 des Deckels 4, ohne wandgängig zu sein. Dabei sind die Mischflügel 40a-d jeweils vor den Durchgangsöffnungen 39a-d angeordnet, sodass ihre axiale Projektionsfläche in jeweils eine der Durchgangsöffnungen 39a-d hineinragt. Die Breite der Mischflügel 40a-d ist geringer als die Breite der Durchgangsöffnungen 39a-d, sodass die Durchgangsöffnungen 39a-d nicht abgedeckt sind, wie insbesondere in der Vorderansicht in Fig. 3 ersichtlich ist. Die axiale Querschnittsfläche der Mischflügel 40a-d weist eine trapezähnliche Form auf, wobei axial sich erstreckende Seiten eines jeweiligen Flügelblattes 41a-d derart schrägflächig ausgebildet sind, dass sie in Rotationsrichtung R des Mischflügels eine Steigung aufweisen. Dabei ist die hintere Seite weniger ansteigend und grossflächiger ausgebildet.

Innerhalb der Hauptkammer 22 weist der Rotor 30 fünf weitere Mischflügel 42a-d, 43 auf. Am Ende des kurzen Zylinderabschnitts 18 ist der Mischflügel 43 angeordnet, der seitlich und rückseitig an die stufenförmige Verjüngung zwischen dem kurzen Zylinderabschnitt 18 und dem langen Zylinderabschnitt 19 angrenzt, ohne wandgängig zu sein. Dabei besteht der Mischflügel 43 aus vier im Wesentlichen in ihrem radialen Querschnitt quadratisch ausgebildeten Flügelblättern 44a-d, die umfänglich jeweils in einem Bereich angeordnet sind, in welchem der hintere Mischflügel 33 in der Vorkammer 17 die Durchgangsöffnungen 39a-d aufweist. Die Flügelblätter 44a-d ragen jedoch in radialer Richtung nicht über den Aussenumfang des inneren Flügelabschnitts 34 des hinteren Mischflügels 33 hinaus. Durch eine umfängliche ringförmige Auskragung entlang der Rotorachse 31 sind die Flügelblätter 44a-d in ihrem Anfangsabschnitt miteinander verbunden.

In axialer Verlaufsrichtung des anschliessenden langen Zylinderabschnitts 19 sind vier weitere Mischflügel 42a-d mit jeweils vier Flügelblättern vorgesehen. Alle Flügelblätter der Mischflügel 42a-d sind identisch ausgebildet und weisen radial eine im Wesentlichen gezackte Form auf, die auf der in Rotationsrichtung R vorderen Seite abgerundet ist. In axialer Richtung sind sie länger als die Flügelblätter 44a-d ausgebildet. Die Flügelblätter der Mischflügel 42a-d grenzen an die Innenwand des langen Zylinderabschnitts 19, ohne wandgängig zu sein. Dabei sind sie umfänglich fluchtend bezüglich der Flügelblätter nachfolgender Mischflügel 42a-d angeordnet, wobei sich die Anordnung jeweils hinter einem der Flügelblätter 44a-d des Mischflügels 43 erstreckt. Vier axial sich erstreckende, längliche Auskragungen der Rotorachse 31 verlaufen von der Rückseite des hinteren Mischflügels 33 durch die jeweiligen Flügelblätter 44a-d hindurch bis hin zu den jeweiligen Flügelblättern des vordersten der Mischflügel 42a-d.

Beim Mischvorgang wird die Komponente mit dem geringeren Volumenanteil durch die kleine Einlassöffnung 12 und die Komponente mit dem höheren Volumenanteil durch die grosse Einlassöffnung 13 in die Vorkammer 17 gedrückt. Beim Passieren des vorderen Mischflügels 40 wird eine erste Verwirbelung insbesondere der Komponente mit dem kleineren Volumenanteil bewirkt, worauf die Komponenten auf die tellerartige Oberfläche des hinteren Mischflügels 33 auftreffen.

Durch die limitierte Breite der Einzelkanäle 23a-d, die zudem nur temporär - nämlich während einer axialen Überlappung mit den Durchgangsöffnungen 39a-d des rotierenden hinteren Mischflügels 33 - geöffnet sind, ist das Ablassen der Komponenten von der Vorkammer 17 in die Hauptkammer 22 verzögert. Durch geeignete Auswahl der Anzahl und Dimensionierung der Einzelkanäle 23a-d sowie der Durchgangsöffnungen 39a-d ist die Verweildauer der Komponenten auf der tellerartigen Oberfläche des hinteren Mischflügels 33 in weitem Rahmen nahezu beliebig einstellbar. Dadurch kann beispielsweise erreicht werden, dass zu Beginn des Mischvorgangs die Vorkammer zunächst nahezu vollständig mit den zugeführten Komponenten gefüllt sein muss, bevor die Komponenten in die Hauptkammer gelangen.

Dank der grossflächigen Ausbildung des hinteren Mischflügels 33 wird in diesem Zeitraum die Konzentration der jeweiligen Komponenten des Gemisches mit einer hohen Genauigkeit geregelt und gleichzeitig eine Vormischung durchgeführt, um derart eine globale Homogenisierung des Gemisches zu erreichen. Letztere wird insbesondere durch die Elemente 37a-d auf den Flügelblättern 36a-d verbessert, die eine Verwirbelung der Komponenten bzw. des Vorgemisches während der Bewegung entlang der Oberfläche des hinteren Mischflügels 33 verursachen.

Gleichzeitig trägt die Scherwirkung des vorderen Mischflügels 40 mit den abgeschrägten axialen Seitenkanten seiner Mischflügel 41a-d zu dem Vormischprozess bei. Da dessen axiale Projektionsfläche in jeweils eine Durchgangsöffnung 39a-d des hinteren Mischflügels 33 hineinragt wird verhindert, dass die zugeführten Komponenten direkt in die Durchgangsöffnungen 39a-d gelangen, ohne auf den äusseren bzw. inneren Flügelabschnitt 35 bzw. 34 aufzutreffen. Die grossflächigere, hintere Seitenkante der Mischflügel 41a-d sorgt zudem für eine Umleitung der vorgemischten Masse in Richtung der Durchgangsöffnungen 39a-d und für eine Zuführung zu den Einzelkanälen 23a-d.

Derart wird bereits in der Vorkammer 17 ein hoher globaler Homogenisierungsgrad des Gemisches erreicht. Dadurch kann die Anzahl der Mischflügel 42a-d, 43 in der Hauptkammer 22 klein gehalten werden, um dennoch einen hervorragenden globalen und lokalen Homogenisierungsgrad des Gemisches beim Austreten durch die Auslassöffnung 20 zu erhalten. Dies führt zu einer kosten- und platzsparenden Ausgestaltung des Mischers 1, insbesondere bezüglich der axialen Gesamtlänge desselben.

Aus der Beschreibung des bevorzugten Ausführungsbeispiels sind dem Fachmann zahlreiche Abwandlungen zugänglich, ohne den Schutzbereich der Erfindung zu verlassen, der durch die Ansprüche definiert ist.

So muss die Anzahl der Einzelkanäle 23a-d nicht zwangsläufig der Anzahl der Durchgangsöffnungen 39a-d entsprechen, um die gewünschte Verweildauer des Gemisches in der Vorkammer 17 zu erhalten. Weiterhin kann der Übergangsabschnitt 16 nicht als ein integraler Bestandteil des Gehäuses 2 realisiert sein. Beispielsweise kann es sich dabei auch um ein distal sich verjüngendes Element im Innenraum des Gehäuses 2 handeln.

Ferner ist denkbar, dass die Einzelkanäle 23a-d und/oder die Durchgangsöffnungen 39a-d in ihrer Breite variieren, insbesondere eine zunehmende oder abnehmende Breite entlang dem Übergangsabschnitt 16 aufweisen, um derart den gewünschten Volumenstrom von der Vorkammer 17 in die Hauptkammer 22 zu regulieren. Ebenso kann ihre Tiefe variieren.

Weiterhin können die Einzelkanäle 23a-d neben ihrer radial zum Zentrum hin und schräg nach hinten gerichteten Ausdehnung auch eine umfängliche Schrägstellung entlang dem Übergangsabschnitt 16 aufweisen, so dass der Volumenstrom der Komponenten von der Vorkammer 17 in die Hauptkammer 22 neben einer zentralen auch eine umfängliche Richtungskomponente aufweist.

Ausserdem können der Komponente mit dem höheren Volumenanteil mehr als nur eine weitere Komponente mit einem geringeren Volumenanteil zugemischt werden. In diesem Falle bedarf es eines weiteren Einlasses in der Vorderwand 9 des Deckels 4. Weiterhin bringt die Ausgestaltung des dynamischen Mischers 1 auch dann Vorteile, falls die Komponenten das gleiche Mischverhältnis aufweisen, wobei gleich grosse Einlassöffnungen 12, 13 vorzusehen sind.

Die Baulänge des Mischergehäuses 2 kann je nach Art und Anzahl der zu mischenden Komponenten und der Anzahl der vorzusehenden Mischstufen variieren. Beispielsweise ist bei einem Mischer zur Herstellung von Abformmassen für dentale Abdrücke eine Gesamtlänge zwischen 3 cm und 10 cm denkbar.

### Bezugszeichenliste

- 1: dynamischer Mischer
- 2: Gehäuse
- 3: Gehäusekörper
- 4: Deckel
- 5: Dichtlippe
- 6: Deckelaussenwand
- 7: Deckelinnenwand
- 8a, b: Aussparungen
- 9: Deckelvorderwand

- 10: Rotoröffnung
- 11: zylinderförmige Aufnahme
- 12: kleine Einlassöffnung
- 13: grosse Einlassöffnung
- 14: Aufnahme der kleinen Einlassöffnung
- 15: Aufnahme der grossen Einlassöffnung
- 16: Übergangsabschnitt
- 16a: innere Seitenkante des Übergangsabschnitts
- 16b: Innenwandung des Übergangsabschnitts
- 16c: äussere Seitenkante des Übergangsabschnitts
- 17: Vorkammer
- 18: kurzer Zylinderabschnitt
- 19: langer Zylinderabschnitt
- 20: Auslassöffnung
- 21: auslassseitige Verjüngung
- 22: Hauptkammer
- 23a-d: Einzelkanäle
- 24a-d: Auskragungen

- 30: Rotor
- 31: Rotorachse
- 32: vorderes freies Ende des Rotors
- 33: hinterer Mischflügel
- 34: innerer Flügelabschnitt
- 35: äusserer Flügelabschnitt
- 36a-d: Flügelblätter
- 37a-d: Verwirbelungselemente
- 38a, b: Seitenkante der Flügelblätter
- 39a-d: Durchgangsöffnungen
- 40: vorderer Mischflügel
- 41a-d: Flügelblätter
- 42a-d: Mischflügel
- 43: Mischflügel
- 44a-d: Flügelblätter

- R: Rotationsrichtung des Rotors

## Patentansprüche

1. Dynamischer Mischer für niedrig- bis hochviskose Komponenten, insbesondere zum Mischen von Dentalmassen, mit einem Rotor (30) und einem Gehäuse (2), das vordere Einlassöffnungen (12, 13) für die Komponenten und mindestens eine hintere Auslassöffnung (20) aufweist und dessen Innenraum eine Vorkammer (17) und eine Hauptkammer (22) umfasst, wobei die Vorkammer (17) in einem distal sich verjüngenden Übergangsabschnitt (16) in die Hauptkammer (22) mündet, **gekennzeichnet durch** mindestens einen Einzelkanal (23a-d) als Durchgang von der Vorkammer (17) in die Hauptkammer (22), wobei sich die Breite des Einzelkanals (23a-d) über einen Teilumfang des Übergangsabschnitts (16) erstreckt.

2. Dynamischer Mischer nach Anspruch 1, **dadurch gekennzeichnet, dass** die Verjüngung im Wesentlichen konisch verläuft.

3. Dynamischer Mischer nach Anspruch 1 oder 2,
**gekennzeichnet durch** mindestens zwei, vorzugsweise vier, Einzelkanäle (23a-d).

4. Dynamischer Mischer nach einem der Ansprüche 1 bis 3, **dadurch gekennzeichnet, dass** benachbarte Einzelkanäle (23a-d) in Umfangsrichtung des Übergangsabschnitts (16) den jeweils gleichen Abstand aufweisen.

5. Dynamischer Mischer nach einem der Ansprüche 1 bis 4, **dadurch gekennzeichnet, dass** jeweils ein Einzelkanal (23a-d) durch eine Vertiefung in der Innenwand des Gehäuses (2) gebildet ist.

6. Dynamischer Mischer nach einem der Ansprüche 1 bis 5, **dadurch gekennzeichnet, dass** der Rotor (30) innerhalb der Vorkammer (17) einen hinteren Mischflügel (33) mit einem äusseren Flügelabschnitt (35) aufweist, der axial vor dem Übergangsabschnitt (16) angeordnet ist, wobei mindestens eine Durchgangsöffnung (39a-d) in dem äusseren Flügelabschnitt (35) ausgebildet ist.

7. Dynamischer Mischer nach Anspruch 6, **dadurch gekennzeichnet, dass** der äussere Flügelabschnitt (35) einlassseitig eine radial nach innen gerichtete Senkung aufweist.

8. Dynamischer Mischer nach Anspruch 6 oder 7, **dadurch gekennzeichnet, dass** der äussere Flügelabschnitt auslassseitig entlang der Innenwandung (16b) des Übergangsabschnitts (16) in minimaler reibungsvermeidend axialer Beabstandung angeordnet ist.

9. Dynamischer Mischer nach einem der Ansprüche 6 bis 8, **gekennzeichnet durch** einen konzentrischen inneren Flügelabschnitt (34) des hinteren Mischflügels (33), wobei der innere Flügelabschnitt (34) einlassseitig eine radial im Wesentlichen flach verlaufende Oberfläche aufweist.

10. Dynamischer Mischer nach einem der Ansprüche 6 bis 9, **dadurch gekennzeichnet, dass** die Anzahl der Durchgangsöffnungen (39a-d) der Anzahl der Einzelkanäle (23a-d) entspricht.

11. Dynamischer Mischer nach einem der Ansprüche 6 bis 10, **dadurch gekennzeichnet, dass** die Breite jeweils einer Durchgangsöffnung (39a-d) und/oder die umfängliche Beabstandung benachbarter Durchgangsöffnungen (39a-d) im Wesentlichen derjenigen der Einzelkanäle (23a-d) entspricht.

12. Dynamischer Mischer nach einem der Ansprüche 6 bis 11, **dadurch gekennzeichnet, dass** die Durchgangsöffnung (39a-d) sich jeweils bis an den Aussenrand des äusseren Flügelabschnitts (35) erstreckt.

13. Dynamischer Mischer nach einem der Ansprüche 6 bis 12, **dadurch gekennzeichnet, dass** die Länge jeweils einer Durchgangsöffnung (39a-d) sich im Wesentlichen radial über den gesamten äusseren Flügelabschnitt (35) erstreckt.

14. Dynamischer Mischer nach einem der Ansprüche 6 bis 13, **dadurch gekennzeichnet, dass** entlang der seitlichen Begrenzungen einer Durchgangsöffnung (39a-d) jeweils eine Schrägkante (38a, b) in dem äusseren Flügelabschnitt (35) ausgebildet ist.

15. Dynamischer Mischer nach einem der Ansprüche 6 bis 14, **dadurch gekennzeichnet, dass** auf der einlassseitigen Oberfläche des äusseren Flügelabschnitts (35) axial sich erstreckende Verwirbelungselemente (37a-d) angeordnet sind.

16. Dynamischer Mischer nach einem der Ansprüche 6 bis 15, **dadurch gekennzeichnet, dass** der Rotor (30) innerhalb der Vorkammer (17) einen vorderen Mischflügel (40) mit mindestens einem radial sich erstreckenden Flügelblatt (36a-d) aufweist, dessen axiale Projektionsfläche in jeweils eine Durchgangsöffnung (39a-d) des hinteren Mischflügels (33) hineinragt.

17. Dynamischer Mischer nach Anspruch 16, **dadurch gekennzeichnet, dass** die Anzahl der Flügelblätter (36a-d) des vorderen Mischflügels (40) der Anzahl der Durchgangsöffnungen des hinteren Mischflügels (33) entspricht.

18. Dynamischer Mischer nach Anspruch 16 oder 17, **dadurch gekennzeichnet, dass** die axial verlaufenden Seiten eines jeweiligen Flügelblattes (36a-d) derart schrägflächig ausgebildet sind, dass sie in Rotationsrichtung (R) des Mischflügels eine Steigung aufweisen.

19. Dynamischer Mischer nach einem der Ansprüche 1 bis 18, **dadurch gekennzeichnet, dass** der Rotor (30) innerhalb der Hauptkammer (22) eine Mehrzahl umfänglich fluchtender Mischflügel (42a-d) mit vereinzelten Flügelblättern aufweist.

20. Dynamischer Mischer nach Anspruch 19, **dadurch gekennzeichnet, dass** der Rotor (30) innerhalb der Hauptkammer (22) vor den umfänglich fluchtenden Mischflügeln (42a-d) einen Mischflügel (43) mit grösserer Radialoberfläche seiner vereinzelten Flügelblätter aufweist.

## Claims

1. A dynamic mixer for low viscosity to high viscosity components, in particular for the mixing of dental compositions, having a rotor (30) and a housing (2), which has front inlet openings (12, 13) for the components and at least one rear outlet opening (20) and the inner space of which includes a pre-chamber (17) and a main chamber (22), with the pre-chamber (17) opening into the main chamber (22) in a distal, tapering transition section (16), **characterized by** at least one individual channel (23a-d) as a passage from the pre-chamber (17) into the main chamber (22), with the width of the individual channel (23a-d) extending over a part of the periphery of the transition section (16).

2. A dynamic mixer in accordance with claim 1, **characterized in that** the taper extends substantially conically.

3. A dynamic mixer in accordance with claim 1 or claim 2, **characterized by** at least two, preferably four individual channels (23a-d).

4. A dynamic mixer in accordance with any one of the claims 1 to 3, **characterized in that** adjacent individual channels (23a-d) each have the same spacing in the peripheral direction of the transition section (16).

5. A dynamic mixer in accordance with any one of the claims 1 to 4, **characterized in that** an individual channel (23a-d) is in each case formed by a recess in the inner wall of the housing (2).

6. A dynamic mixer in accordance with any one of the claims 1 to 5, **characterized in that** the rotor (30) has a rear mixing rotor (33) with an outer rotor section (35) within the pre-chamber (17), the outer rotor section (35) being arranged axially in front of the transition section (16), with at least one passage opening (39a-d) being formed in the outer rotor section (35).

7. A dynamic mixer in accordance with claim 6, **characterized in that** the outer rotor section (35) has a radially inwardly directed depression at the inlet side.

8. A dynamic mixer in accordance with claim 6 or claim 7, **characterized in that** the outer rotor section is disposed at the outlet side along the inner wall (16b) of the transition section (16) in a minimum axial spacing avoiding friction.

9. A dynamic mixer in accordance with any one of the claims 6 to 8, **characterized by** a concentric inner rotor section (34) of the rear mixing rotor (33), with the inner rotor section (34) having at the inlet side a surface which extends substantially flatly in the radial direction.

10. A dynamic mixer in accordance with any one of the claims 6 to 9, **characterized in that** the number of the passage openings (39a-d) corresponds to the number of the individual channels (23a-d).

11. A dynamic mixer in accordance with any one of the claims 6 to 10, **characterized in that** the width of a passage opening (39a-d) and/or the peripheral spacing of adjacent passage openings (39a-d) in each case corresponds substantially to those of the individual channels (23a-d).

12. A dynamic mixer in accordance with any one of the claims 6 to 11, **characterized in that** the passage opening (39a-d) respectively extends up to the outer margin of the outer rotor section (35).

13. A dynamic mixer in accordance with any one of the claims 6 to 12, **characterized in that** the length of a passage opening (39a-d) in each case extends substantially radially over the entire outer rotor section (35).

14. A dynamic mixer in accordance with any one of the claims 6 to 13, **characterized in that** an oblique edge (38a, b) is in each case formed in the outer rotor section (35) along the lateral boundaries of a passage opening (39a-d).

15. A dynamic mixer in accordance with any one of the claims 6 to 14, **characterized in that** axially extending eddy generating elements (37a-d) are arranged at the inlet side surface of the outer rotor section (35).

16. A dynamic mixer in accordance with any one of the claims 6 to 15, **characterized in that** the rotor (30) inside the pre-chamber (17) has a front mixing rotor (40) with at least one radially extending vane (36a-d), the axial projection surface of which projects in each case into a passage opening (39a-d) of the rear mixing rotor (33).

17. A dynamic mixer in accordance with claim 16, **characterized in that** the number of the vanes (36a-d) of the front mixing rotor (40) corresponds to the number of the passage openings of the rear mixing rotor (33).

18. A dynamic mixer in accordance with claim 16 or 17, **characterized in that** the axially extending sides of a respective vane (36a-d) are made with an oblique surface in such a way that they have a gradient in the direction of rotation (R) of the mixing rotor.

19. A dynamic mixer in accordance with any one of the claims 1 to 18, **characterized in that** the rotor (30) within the main chamber (22) has a plurality of a peripherally aligned mixing rotors (42a-d) with separated vanes.

20. A dynamic mixer in accordance with claim 19, **characterized in that** the rotor (30) has a mixing rotor (43) with a larger radial surface of its separated vanes within the main chamber (22) in front of the peripherally aligned mixing rotors (42a-d).

## Revendications

1. Mélangeur dynamique pour des composants faiblement à hautement visqueux, en particulier, pour le mélange de masses dentaires, avec un rotor (30) et un boîtier (2) qui présente des ouvertures d'admission avant (12, 13) pour les composants et au moins une ouverture d'évacuation arrière (20), et dont l'espace intérieur comprend une anti-chambre (17) et une chambre principale (22), où l'anti-chambre (17) débouche dans une section de transition retrécissant distalement (16) dans la chambre principale (22), **caractérisé par** au moins un canal individuel (23a-d) en tant que passage de l'anti-chambre (17) dans la chambre principale (22), où la largeur du canal individuel (23a-d) s'étend sur une étendue partielle de la section de transition (16).

2. Mélangeur dynamique selon la revendication 1, **caractérisé en ce que** le retrécissement est sensiblement conique.

3. Mélangeur dynamique selon la revendication 1 ou 2, **caractérisé par** au moins deux, de préférence quatre canaux individuels (23a-d).

4. Mélangeur dynamique selon l'une des revendications 1 à 3, **caractérisé en ce que** des canaux individuels avoisinants (23a-d) présentent dans la direction périphérique de la section de transition (16) respectivement le même écart.

5. Mélangeur dynamique selon l'une des revendications 1 à 4, **caractérisé en ce qu'**à chaque fois un canal individuel (23a-d) est formé par un creux dans la paroi intérieure du boîtier (2).

6. Mélangeur dynamique selon l'une des revendications 1 à 5, **caractérisé en ce que** le rotor (30) à l'intérieur de l'anti-chambre (17) présente une aube de mélange arrière (33) avec une section d'aube extérieure (35) qui est disposée axialement devant la section de transition (16), où au moins une ouverture traversante (39a-d) est réalisée dans la section d'aube extérieure (35).

7. Mélangeur dynamique selon la revendication 6, **caractérisé en ce que** la section d'aube extérieure (35) présente, côté admission, un enfoncement dirigé radialement vers l'intérieur.

8. Mélangeur dynamique selon la revendication 6 ou 7, **caractérisé en ce que** la section d'aube extérieure, côté évacuation, est disposée le long de la paroi intérieure (16b) de la section de transition (16) à un espacement axial minimal évitant un frottement.

9. Mélangeur dynamique selon l'une des revendications 6 à 8, **caractérisé par** une section d'aube intérieure concentrique (34) de l'aube de mélange arrière (33), où la section d'aube intérieure (34) présente, côté admission, une surface sensiblement plate, s'étendant radialement.

10. Mélangeur dynamique selon l'une des revendications 6 à 9, **caractérisé en ce que** le nombre d'ouvertures traversantes (39a-d) correspond au nombre des canaux individuels (23a-d).

11. Mélangeur dynamique selon l'une des revendications 6 à 10, **caractérisé en ce que** la largeur respectivement d'une ouverture traversante (39a-d) et/ou l'écartement périphérique d'ouvertures traversantes avoisinantes (39a-d) correspond sensiblement à celle des canaux individuels (23a-d) .

12. Mélangeur dynamique selon l'une des revendications 6 à 11, **caractérisé en ce que** l'ouverture traversante (39ad) s'étend à chaque fois jusqu'au bord extérieur de la section d'aube extérieure (35).

13. Mélangeur dynamique selon l'une des revendications 6 à 12, **caractérisé en ce que** la longueur à chaque fois d'une ouverture traversante (39a-d) s'étend sensiblement radialement sur toute la section d'aube extérieure (35).

14. Mélangeur dynamique selon l'une des revendications 6 à 13, **caractérisé en ce qu'**est réalisé le long des délimitations latérales d'une ouverture traversante (39a-d) à chaque fois une arête inclinée (38a, b) dans la section d'aube extérieure (35).

15. Mélangeur dynamique selon l'une des revendications 6 à 14, **caractérisé en ce que** sont disposés sur la surface côté admission de la section d'aube extérieure (35) des éléments de tourbillonnement (37a-d) s'étendant axialement.

16. Mélangeur dynamique selon l'une des revendications 6 à 15, **caractérisé en ce que** le rotor (30) à l'intérieur de l'antichambre (17), présente une aube de mélange avant (40) avec au moins un aubage (36a-d) s'étendant radialement, dont la face de projection axiale fait saillie à chaque fois dans une ouverture traversante (39a-d) de l'aube de mélange arrière.

17. Mélangeur dynamique selon la revendication 16, **caractérisé en ce que** le nombre d'aubages (36a-d) de l'aube de mélange avant (40) correspond au nombre des ouvertures traversantes de l'aube de mélange arrière (33).

18. Mélangeur dynamique selon la revendication 16 ou 17, **caractérisé en ce que** les côtés s'étendant axialement d'un aubage respectif (36a-d) sont réalisés de telle sorte avec une face inclinée qu'ils présentent dans la direction de rotation (R) de l'aube de mélange un pas.

19. Mélangeur dynamique selon l'une des revendications 1 à 18, **caractérisé en ce que** le rotor (30) présente à l'intérieur de la chambre principale (22) une multitude d'aubes de mélange alignées sur le pourtour (42a-d) avec des aubages individualisés.

20. Mélangeur dynamique selon la revendication 19, **caractérisé en ce que** le rotor (30) présente à l'intérieur de la chambre principale (22) en amont des aubes de mélange alignées sur le pourtour (42a-d) une aube de mélange (43) avec une surface radiale plus grande de ses aubages individualisés.
